# FASCICULE DE BREVET EUROPEEN

(11) **EP 0 537 835 B1**
(45) Date de publication et mention de la délivrance du brevet: **25.09.1996**
(21) Numéro de dépôt: 92203070.5
(22) Date de dépôt: 06.10.1992
(51) Int. Cl.: C08F 10/02, C08F 4/22

(54) **Procédé de préparation de catalyseurs de polymérisation des oléfines, catalyseurs obtenus selon ce procédé et procédé pour polymériser les oléfines en présence de ces catalyseurs**
Verfahren zur Herstellung von Katalysatoren zur Olefinpolymerisation, derartig hergestellte Katalysatoren und Verfahren zur Polymerisation unter Verwendung dieses Katalysators
Process for making olefin polymerization catalysts, catalysts obtained thereby and polymerization process using the same

(30) Priorité: 14.10.1991 BE 9100942
(43) Date de publication de la demande: 21.04.1993
(73) Titulaire: SOLVAY (Société Anonyme), B-1050 Bruxelles (BE)
(72) Inventeur: Koch, Benoit, B-4280 Hannut (BE)
(74) Mandataire: Marckx, Frieda

(56) Documents cités:
- EP-A- 0 055 866
- GB-A- 0 814 295
- GB-A- 2 050 858

## Description

La présente invention concerne un procédé de préparation de catalyseurs de polymérisation des oléfines, les catalyseurs obtenus selon ce procédé ainsi qu'un procédé pour polymériser les oléfines en présence de ces catalyseurs.

Il est connu de polymériser des oléfines, telles que l'éthylène, au moyen de catalyseurs contenant du chrome déposé sur un support qui peut être de la silice, de l'alumine, de la zircone ou de la thorine. La synthèse de ces catalyseurs comprend le plus souvent une étape finale de calcination en atmosphère oxydante, dans des conditions telles qu'une partie du chrome est convertie en chrome hexavalent (brevet US-A-2825721 (PHILLIPS PETROLEUM)).

Ces catalyseurs sont généralement obtenus par dispersion du support dans des solutions aqueuses ou organiques de composés du chrome. La production industrielle de catalyseurs selon ce procédé implique le séchage des catalyseurs, le recyclage des solutions de chrome et le traitement des effluents susceptibles de contenir des composés du chrome avant leur rejet. Un tel procédé est long et complexe.

Un procédé plus simple consiste à effectuer un mélange, intime et exempt de solvant, de trioxyde de chrome (CrO₃) et de support puis à le calciner (brevet US-A-2825721 (PHILLIPS PETROLEUM)). On améliore la dispersion du chrome sur le support en effectuant le mélange des réactifs à une température comprise entre 93 et 190 °C (Brevet GB-814295 (PHILLIPS PETROLEUM)). Les catalyseurs ainsi obtenus présentent néanmoins une importante quantité d'agglomérats de sesquioxyde de chrome (Cr₂O₃), inactifs en polymérisation, qui se retrouvent inchangés dans les polymères dont ils altèrent les propriétés.

On a également décrit l'obtention de catalyseurs au chrome par mélange à sec des supports avec des composés organiques du chrome suivi d'un traitement thermique sous atmosphère non oxydante comprenant des paliers successifs à 177 °C, 290 °C et 900 °C (Brevet US-A-3953413 (CHEMPLEX CO.)). Les catalyseurs obtenus selon ce procédé contiennent des résidus noirs de carbone et présentent des activités médiocres. Leurs performances peuvent être améliorées si l'on termine le traitement thermique par un post-traitement en milieu oxydant pendant une période suffisamment courte pour éliminer les résidus de carbone (Brevet US-A-4053437 (CHEMPLEX CO)). Une telle procédure particulièrement longue et complexe implique l'utilisation d'appareillages sophistiqués susceptibles de travailler en atmosphère inerte.

On a maintenant trouvé un procédé de préparation de catalyseurs de polymérisation des oléfines particulièrement simple qui n'implique pas l'utilisation de solvant et qui ne présente pas les inconvénients des procédés de ce type précédemment décrits.

La présente invention concerne à cet effet un procédé de préparation de catalyseurs de polymérisation des oléfines comprenant :
a) le mélange d'un support contenant au moins un composé (A) tel que défini ci-dessous avec au moins un sel de chrome;
b) la préactivation dudit mélange par chauffage sous atmosphère oxydante, à une température inférieure à la température de fusion du sel de chrome pour obtenir un précurseur du catalyseur;
c) l'activation de ce précurseur par calcination sous atmosphère oxydante, dans des conditions telles qu'une partie au moins du chrome soit convertie en chrome hexavalent.

Les supports susceptibles d'être utilisés dans le procédé selon l'invention sont des poudres contenant au moins un composé (A) choisi parmi les composés oxygénés des éléments des groupes IVb, IIIa, et IVa du Tableau Périodique (version publiée dans Handbook of Chemistry and Physics, 50me édition, page B-3 1969-1970). On peut ainsi utiliser, à titre de composés (A), les oxydes de titane, de zirconium, d'aluminium, de silicium ou de thorium, le phosphate d'aluminium ou leurs mélanges. Les supports donnant de particulièrement bons résultats sont les supports contenant à titre de composés (A) de la silice, de l'alumine, du phosphate d'aluminium ou des mélanges de ces composés.

Lorsque l'on souhaite obtenir des catalyseurs capables de produire des polymères présentant des poids moléculaires moyens moins élevés, reflétés par des indices de fusion (melt indexes) plus élevés, qui sont plus aisément transformables par les méthodes conventionnelles de mise en oeuvre, ces supports peuvent également contenir au moins un composé (B) d'au moins un élément des groupes IVb et IIIa du Tableau Périodique, le composé (B) étant différent du composé (A) et étant par exemple sélectionné parmi les composés du titane, du zirconium et de l'aluminium, les composés de titane étant le plus souvent préférés.

Le composé (A) est généralement le constituant principal de ces supports. Sa concentration est généralement au moins égale à 50 % en poids, de préférence supérieure à 90 % en poids et plus particulièrement supérieure à 93 % en poids par rapport au poids total du support. Les autres constituants du support sont généralement choisis parmi les composés (B).

Lorsque le composé (A) est une silice, les composés (B) donnant les meilleurs résultats sont les oxydes de titane, de zirconium et d'aluminium et le phosphate d'aluminium. Lorsque le composé (B) est un oxyde de titane ou de zirconium, sa concentration dans la silice est le plus souvent d'au moins 0,1 %, de préférence d'au moins 0,5 %, plus particulièrement d'au moins 1 % en poids par rapport au poids total du support. En général la concentration en composé (B) dépasse pas 15 %, de préférence pas 10 % et plus particulièrement pas 6 % du poids total du support. Dans le cas des supports à base de silice qui contiennent des composés de l'aluminium à titre de composé (B), la concentration en composés aluminiques, sensiblement plus élevée, est généralement comprise entre 0,1 et 50 % en poids par rapport au poids total de support. On obtient par exemple de très bons résultats lorsqu'on utilise des supports à base de silice contenant jusqu'à 50 % en poids de phosphate d'aluminium (AlPO₄) ou en incorporant à cette silice de 0,5 à 20 % en poids d'alumine.

Lorsque le composé (A) est une alumine, la concentration en Al₂O₃ dans le support est généralement supérieure à 80 % en poids, en particulier supérieure à 85 % en poids par rapport au poids total du support. Les supports à base d'alumine contenant de 0,1 à 20 % en poids, de préférence de 0,5 à 15 % en poids de phosphate d'aluminium ou de dioxyde de titane par rapport au poids total du support donnent de particulièrement bons résultats.

Dans le procédé selon l'invention, on peut également utiliser des supports dont le composé (A) est le phosphate d'aluminium. Les composés (B) sont alors le plus souvent choisis parmi la silice, l'alumine et le dioxyde de titane.

Les supports utilisables dans le procédé selon l'invention sont généralement constitués de particules de dimensions comprises entre 5 et 200 µm, caractérisées en outre par :
- une surface spécifique généralement supérieure à 3 m²/g et de préférence supérieure à 150 m²/g; les surfaces spécifiques peuvent ainsi atteindre 900 m²/g. Les supports les plus couramment utilisés ont une surface spécifique comprise entre 200 et 700 m²/g, et
- un volume poreux compris entre 0,1 et 3,5 cm³/g, de préférence entre 1 et 2,5 cm³/g, plus particulièrement entre 1,2 et 2,2 cm³/g.

Dans le procédé selon l'invention, il peut s'avérer avantageux d'utiliser des supports présentant une distribution granulométrique étroite.

De tels supports sont bien connus de la technique. Leur préparation peut être effectuée par exemple de manière conventionnelle selon les techniques de précipitation et de coprécipitation ou selon toute autre manière connue telle qu'en particulier la gélification de solutions colloïdales. Dans le cas particulier des supports contenant des composés de titane, ces composés peuvent également être introduits par imprégnation du support par une solution non aqueuse d'un alcoolate de titane, comme décrit dans le brevet US-A-3622521 (PHILLIPS PETROLEUM) dont le contenu est incorporé par référence dans la présente description.

Il va de soi que les supports utilisables dans le procédé selon l'invention peuvent contenir plusieurs composés (A) et plusieurs composés (B).

Dans une forme d'exécution avantageuse du procédé selon l'invention, on traite le composé (A) à l'état solide avec un gaz comprenant le composé (B). A cet effet, on utilise de préférence le composé (B) à l'état d'halogénure, par exemple du tétrachlorure de titane ou du tétrafluorure de silicium.

Cette forme d'exécution du procédé selon l'invention peut être réalisée dans un réacteur à lit fixe, dans un réacteur à lit agité ou fluidisé ou encore dans un réacteur rotatif. Les meilleurs résultats sont obtenus dans un lit fluidisé où on met en oeuvre un lit de particules du composé (A) que l'on fluidise au moyen d'un gaz comprenant le composé (B). Ce gaz fluidisant peut être constitué du composé (B). Il est en général constitué du composé (B) et d'un gaz porteur, inerte vis-à-vis des composés (A) et (B), qui a pour fonction d'entraîner le composé (B) dans le lit fluidisé. A titre d'exemples, on peut citer, comme gaz porteur, l'azote, l'argon, l'air et leurs mélanges, de préférence à l'état sec.

Dans cette forme d'exécution avantageuse, il peut s'avérer souhaitable, avant de traiter le composé (A) avec le composé (B) de soumettre le composé (A) à une préactivation par tout moyen connu, notamment par chauffage à une température comprise entre la température ambiante et la température de frittage du composé (A).

L'étape (a) du procédé selon l'invention consiste en la réalisation d'un mélange homogène du support et d'au moins un sel de chrome. Ce mélange peut être effectué selon toutes les techniques connues. On préfère toutefois effectuer une simple mise en contact de support avec le sel de chrome suivi d'une agitation de manière à obtenir un mélange raisonnablement homogène.

Le mélange du support et du sel de chrome est le plus souvent effectué à température ambiante. Dans le procédé de l'invention le mélange du support avec le sel de chrome se fait en l'absence d'une quantité significative d'un solvant dudit composé de chrome.

Les sels de chrome susceptibles d'être utilisés dans le procédé selon l'invention sont des sels inorganiques du chrome tels que le chlorure, le nitrate, le sulfate de chrome ou tels que le chromate ou bichromate d'ammonium et les sels organiques du chrome tels que l'acétate de chrome, le chromate de t-butyle ou l'acétylacétonate de chrome. Les sels organiques du chrome sont particulièrement préférés. Parmi eux l'acétylacétonate de chrome donne de particulièrement bons résultats.

La quantité de sel de chrome introduite dans le mélange est telle que le chrome y est présent dans des proportions variant de 0,05 à 10 % en poids, de préférence de 0,1 à 5 % en poids, plus particulièrement de 0,25 à 2 % en poids par rapport au poids total du mélange.

Le sel de chrome se présente généralement sous forme d'une poudre, présentant de préférence une granulométrie appropriée pour que, lors des étapes (b) et (c), le mélange du support et du sel de chrome obtenu à l'étape (a) reste homogène sans qu'il se produise une ségrégation de phases. A cet effet, le sel de chrome est préférentiellement constitué de particules de dimension du même ordre de grandeur que celle du support. Des poudres de sel de chrome ayant conduit à de très bons résultats sont celles dont les particules sont de dimensions comprises entre 5 et 200 µm.

Lorsque les grains du sel de chrome sont relativement gros, il peut s'avérer utile de le broyer au préalable. La détermination précise des conditions de mise en oeuvre de ce sel peut, dès lors, nécessiter quelques essais de routine préalables.

Dans une forme de réalisation particulière du procédé selon l'invention, mettant en oeuvre un support comprenant un composé (B) en plus du composé (A), l'étape (a) est effectuée dans un lit de particules du composé (A) et de particules du sel de chrome, que l'on fluidise au moyen d'un gaz comprenant le composé (B).

L'étape (b) de préactivation est effectuée par chauffage du mélange défini ci-dessus, sous une atmosphère oxydante, à une température inférieure à la température de fusion du sel de chrome de manière à obtenir un précurseur du catalyseur. On obtient en général de bons résultats lorsque la température de préactivation est inférieure d'au moins 5 °C, de préférence inférieure d'au moins 20 °C, plus particulièrement inférieure d'au moins 40 °C à la température de fusion dudit sel de chrome. Cette température est cependant supérieure à la température ambiante. En général cette température est supérieure d'au moins 30 °C et plus particulièrement d'au moins 60 °C à la température ambiante. Par exemple, lorsque la température de fusion du sel de chrome est voisine de 200 °C (acétate de chrome et acétylacétonate de chrome), la température optimale de préactivation est comprise entre 100 et 195 °C, les meilleurs résultats étant obtenus lorsqu'on préactive le mélange entre 125 et 190 °C.

Il va de soi que, lorsque les sels de chrome se décomposent à une température inférieure à leur température de fusion, la température de l'étape (b) de préactivation est inférieure à la température de décomposition dudit sel de chrome.

La durée du traitement de l'étape (b) est généralement comprise entre 0,5 et 18 heures, de préférence entre 1 et 6 heures. On obtient de particulièrement bons résultats lorsque l'on préactive le mélange pendant une durée comprise entre 1,5 et 3 heures. On peut procéder à cette opération en maintenant le catalyseur dans le même réacteur à lit fixe, que celui utilisé ci-dessus. Les meilleurs résultats sont obtenus lorsque l'étape (b) de préactivation est effectuée dans un réacteur à lit tournant ou dans un réacteur à lit fluidisé.

L'étape (b) de préactivation peut être effectuée sous une atmosphère d'air ambiant, d'air sec ou d'oxygène moléculaire. On opère de préférence sous une atmosphère d'air sec.

L'étape (b), et en particulier la température à laquelle il convient de la réaliser, est une caractéristique essentielle du procédé selon l'invention qui permet, lors de l'activation ultérieure (étape (c)), d'assurer une bonne dispersion du chrome sur le support et d'éviter la formation d'agglomérats de Cr₂O₃.

Le précurseur du catalyseur est ensuite généralement soumis à une étape (c) d'activation par calcination sous atmosphère oxydante de manière à obtenir des catalyseurs actifs pour la polymérisation des oléfines. Cette dernière étape a pour effet de transformer au moins une partie du composé de chrome en oxyde de chrome hexavalent.

Cette activation peut avoir lieu, de manière connue, par chauffage, en présence d'air éventuellement séché ou d'oxygène moléculaire, à une température d'au moins 300 °C, de préférence d'au moins 400 °C, plus particulièrement d'au moins 450 °C. La température de calcination ne dépasse en général pas 1200 °C, de préférence pas 1000 °C et plus particulièrement pas 950 °C. L'activation s'effectue pendant une durée généralement comprise entre 30 minutes et 50 heures et plus particulièrement entre 2 et 20 heures. On peut procéder à cette opération par exemple en maintenant le catalyseur dans un réacteur tubulaire en quartz sous balayage d'air sec ou en le maintenant dans un lit fluidisé par de l'air sec jusqu'à ce que la matière soit refroidie. La montée en température peut être effectuée de manière continue ou en observant un ou plusieurs paliers.

Il va de soi que l'étape (c) d'activation peut être effectuée directement après l'étape (b) de préactivation du mélange et dans le même réacteur.

Le chrome est généralement présent dans le catalyseur final en proportions variant de 0,05 à 10 % en poids, de préférence de 0,1 à 5 % en poids, plus particulièrement de 0,25 à 2 % en poids de chrome sur base du poids total du catalyseur.

Un des avantages du procédé de préparation des catalyseurs de polymérisation des oléfines selon l'invention est qu'il conduit à des catalyseurs particulièrement actifs tout en étant particulièrement simple et aisé à mettre en oeuvre. En outre, il assure une bonne répartition des composés de chrome sur le support. De plus, ces catalyseurs sont le plus souvent exempts d'agglomérats de Cr₂O₃ susceptibles d'affecter la qualité des polymères.

Un autre avantage du procédé selon l'invention est qu'il permet de supprimer l'utilisation de solutions de composés de chrome et par conséquent le recyclage de ces solutions ainsi que le traitement des effluents.

La présente invention concerne également les catalyseurs de polymérisation des oléfines obtenus selon le procédé décrit ci-dessus. Ces catalyseurs présentent généralement de bonnes propriétés catalytiques. En particulier lorsque le sel de chrome est l'acétylacétonate de chrome, on obtient des catalyseurs très actifs qui présentent des temps d'induction, tels que définis plus loin, particulièrement courts.

La présente invention concerne enfin un procédé pour polymériser les oléfines en présence des catalyseurs décrits ci-dessus.

Les catalyseurs au chrome tels que décrits dans l'invention peuvent être utilisés pour la polymérisation et la copolymérisation des oléfines contenant de 2 à 8 atomes de carbone par molécule et en particulier pour la production d'homopolymères de l'éthylène et de copolymères de l'éthylène avec un ou plusieurs comonomères sélectionnés parmi les oléfines supérieures décrites ci-dessus. De préférence, ces comonomères sont le propylène, le 1-butène, le 1-pentène, le 3-méthyl-1-butène, le 1-hexène, les 3-et 4-méthyl-1-pentènes ou le 1-octène. Des dioléfines comprenant de 4 à 18 atomes de carbone peuvent également être copolymérisées avec l'éthylène. De préférence, les dioléfines sont des dioléfines aliphatiques non conjuguées telles que le 1,4-hexadiène, des dioléfines monocycliques non conjuguées telles que le 4-vinylcyclohexène ou des dioléfines alicycliques ayant un pont endocyclique telles que le dicyclopentadiène, les méthylène- et éthylidène-norbornènes ou des dioléfines aliphatiques conjuguées telles que le 1,3-butadiène, l'isoprène et le 1,3-pentadiène.

Les catalyseurs selon l'invention conviennent particulièrement bien pour la fabrication d'homopolymères de l'éthylène et de copolymères contenant au moins 90 %, de préférence au moins 95 % en poids d'éthylène. Les comonomères préférés sont le propylène, le 1-butène, le 1-hexène ou le 1-octène.

La polymérisation peut être effectuée selon n'importe quel procédé connu : en solution, en suspension dans un diluant hydrocarboné ou encore en phase gazeuse.

Les catalyseurs de l'invention trouvent une utilisation particulièrement intéressante dans les polymérisations en suspension pour la production de polymères présentant un large domaine de variation des indices de fluidité (melt indexes) et des distributions des masses moléculaires, ces deux paramètres étant contrôlables par les méthodes bien connues de la technique telles que par exemple les conditions de polymérisation, les conditions d'activation du support, sa morphologie, etc.

La polymérisation en suspension est effectuée dans un diluant hydrocarboné tel que les hydrocarbures aliphatiques, cycloaliphatiques et aromatiques liquides, à une température telle que le polymère formé y soit insoluble. Les diluants préférés sont les alcanes linéaires tels que le n-butane, le n-hexane et le n-heptane ou les alcanes ramifiés tels que l'isobutane, l'isopentane, l'isooctane et le 2,2-diméthylpropane ou les cycloalcanes tels que le cyclopentane et le cyclohexane ainsi que les mélanges de ces diluants.

La température de polymérisation est choisie généralement entre 20 et 200 °C, de préférence entre 50 et 150 °C, en particulier entre 80 et 115 °C. La pression d'éthylène est choisie le plus souvent entre la pression atmosphérique et 50 bars, de préférence entre 4 et 20 bars, plus particulièrement entre 5 et 15 bars.

La polymérisation peut être effectuée en continu ou en discontinu.

Les exemples suivants servent à illustrer l'invention. La signification des symboles utilisés dans ces exemples, les unités exprimant les grandeurs mentionnées et les méthodes de mesure de ces grandeurs sont explicitées ci-dessous.
- T₁ =: température de préactivation (étape (b)) exprimée en °C.
- H₁ =: durée de préactivation (étape (b)) exprimée en heure.
- T₂ =: température de calcination (étape (c)) exprimée en °C.
- H₂ =: durée de calcination (étape (c)) exprimée en heure.
- α =: activité catalytique exprimée conventionnellement en grammes de polymère insoluble, obtenus par heure et par gramme de catalyseur et divisés par la fraction molaire d'éthylène dans le diluant.
- t_{ind} =: temps d'induction, défini comme étant le temps écoulé entre l'introduction du catalyseur et l'apparition d'une diminution de pression caractéristique du début de polymérisation.
- MI =: indice de fluidité exprimé en fondu, mesuré sous une charge de 2,16 kg à 190 °C et exprimé en g/10 min (norme ASTM D 1238).
- HLMI =: indice de fluidité exprimé en fondu, mesuré sous une charge de 21,6 kg à 190 °C et exprimé en g/10 min (norme ASTM D 1238).

### Exemples 1 à 4

### A - Préparation des catalyseurs

Dans un récipient en verre, on mélange manuellement le support, tel que renseigné dans le tableau I ci-dessous, avec une poudre d'acétylacétonate de chrome en une quantité telle que la teneur en chrome du mélange soit égale à 10 g/kg (étape (a)). Ce mélange est ensuite placé dans un réacteur à lit fluidisé par de l'air sec et chauffé pendant une période H₁, à la température T₁ telles que renseignées dans le tableau I (étape (b)). La température T₁ est inférieure à la température de fusion de l'acétylacétonate de chrome (210 °C). Le précurseur du catalyseur ainsi obtenu est ensuite activé dans le même réacteur sous balayage d'air par traitement thermique à la température T₂ pendant une durée H₂ avant d'être ramené à température ambiante (étape (c)).

Les catalyseurs se présentent sous forme de poudres parfaitement homogènes et exemptes d'agglomérats de Cr₂O₃.

### B - Polymérisation de l'éthylène - conditions de référence

Dans un autoclave de 3 1 préalablement séché, et muni d'un agitateur, on introduit 1 1 d'isobutane puis on élève la température à 107 °C avant d'y réaliser une pression de 6,6 bars d'éthylène et d'introduire 100 mg de catalyseur préparé selon A. La pression dans le réacteur en cours de polymérisation est maintenue constante par alimentation d'un débit mesuré d'éthylène. La réaction de polymérisation est arrêtée par dégazage lorsque la consommation d'éthylène calculée à partir de la mesure de débit correspond à une productivité de 2500 g de polyéthylène par gramme de catalyseur.

Dans le tableau I repris ci-dessous, sont mentionnées les conditions de préparation des catalyseurs et leurs performances en polymérisation.

**Tableau I**

| Exemples | 1 | 2 | 3 | 4 |
|---|---|---|---|---|
| Support | SiO₂ | SiO₂/TiO₂ | SiO₂/ZrO₂ | SiO₂/Al₂0₃ |
| Composition (%) pds | 100 | 97,7/2,3 | 94,3/5,7 | 87/13 |
| Nom commercial | 532 | TICOGEL N°2 | ZRCOGEL N°1 | MS 13/110 |
| Firme | GRACE | GRACE | GRACE | GRACE |
| Préparation des catalyseurs | | | | |
| étape (b) | | | | |
| T₁ | 190 | 150 | 150 | 150 |
| H₁ | 2 | 2 | 2 | 2 |
| étape (c) | | | | |
| T₂ | 815 | 815 | 700 | 815 |
| H₂ | 5 | 5 | 5 | 5 |
| Agglomérats Cr₂O₃ | non | non | non | non |
| Performances en polymérisation | | | | |
| Activité, α | 45121 | 72848 | 36069 | 47203 |
| t_{ind} | 15 | 12 | 12 | 12 |
| MI | 1,51 | 0,72 | 0,34 | 0,15 |
| HLMI | 88,5 | 49,76 | 64 | 14,6 |

### Exemples 5R à 8R

Ces exemples sont donnés à titre de comparaison.

Les catalyseurs des exemples 5R, 6R et 7R sont obtenus respectivement comme aux exemples 1, 2, et 3 mais en remplaçant l'acétylacétonate de chrome par du trioxyde de chrome.

Le catalyseur de l'exemple 8R est préparé comme à l'exemple 1 mais en omettant l'étape (b) de préactivation à la température T₁.

Les résultats des essais de polymérisation effectués dans les conditions de référence sont repris dans le tableau II ci-dessous.

**Tableau II**

| Exemples | 5R | 6R | 7R | 8R |
|---|---|---|---|---|
| Support | SiO₂ | SiO₂/TiO₂ | SiO₂/Al₂O₃ | SiO₂ |
| Composition (%) | 100 | 97,7/2,3 | 94,3/5,7 | 100 |
| Nom commercial | 532 | TICOGEL N°2 | MS 13/110 | 532 |
| Firme | GRACE | GRACE | GRACE | GRACE |
| Préparation des catalyseurs | | | | |
| étape (b) | | | | |
| T₁ | 190 | 150 | 150 | - |
| H₁ | 2 | 2 | 2 | - |
| étape (c) | | | | |
| T₂ | 815 | 815 | 815 | 815 |
| H₂ | 5 | 5 | 16 | 5 |
| Agglomérats Cr₂O₃ | oui | oui | oui | oui |
| Performances en polymérisation | | | | |
| Activité, α | 37563 | 33719 | 5622 | 31799 |
| t_{ind} | 16 | 20 | 22 | 22 |
| MI | 1,25 | 0,84 | - | 1,95 |
| HLMI | 71,4 | 49,3 | 3,6 | 91 |

### (4) Exemple 9

### A - Préparation du catalyseur

Dans un lit fluidisé on précalcine une poudre de silice 532 de la société GRACE sous air sec à 700 °C pendant 16 heures. Le support précalciné est ensuite traité à 100 °C dans le lit fluidisé avec de l'azote chargé de tétrachlorure de titane liquide jusqu'à la saturation du support par le tétrachlorure de titane. Puis, on ajoute dans le lit fluidisé une poudre d'acétylacétonate de chrome en une quantité telle que la teneur en chrome du mélange soit égale à 10 g/kg (étape (a)). Ce mélange est chauffé pendant 2 heures à 150 °C (étape (b)). Le précurseur du catalyseur ainsi obtenu est ensuite activé dans le même lit fluidisé sous balayage d'air par traitement thermique à 700 °C pendant 5 heures (étape (c)) avant d'être ramené à la température ambiante. Le catalyseur se présente sous la forme d'une poudre parfaitement homogène et exempte d'agglomérats de Cr₂O₃.

### B - Polymérisation de l'éthylène

On répète les opérations décrites dans les exemples 1 à 4 en utilisant le catalyseur obtenu en A. On obtient les performances suivantes en polymérisation :
- Activité, a =: 45293
- t_{ind} =: 10
- MI =: 1,49
- HLMI =: 83,2.

## Revendications

1. Procédé de préparation de catalyseurs de polymérisation des oléfines comprenant :
a) le mélange d'un support contenant au moins un composé (A) choisi parmi les composés oxygénés des éléments des groupes IVb, IIIa et IVa avec au moins un sel de chrome, en l'absence d'oxyde de chrome;
b) la préactivation dudit mélange par chauffage sous atmosphère oxydante, à une température inférieure à la température de fusion du sel de chrome pour obtenir un précurseur du catalyseur;
c) l'activation de ce précurseur par calcination, sous atmosphère oxydante, dans des conditions telles qu'une partie du chrome soit convertie en chrome hexavalent.

2. Procédé selon la revendication 1, caractérisé en ce que le support contient, à titre de composés (A), de la silice, de l'alumine, du phosphate d'aluminium ou des mélanges de ces composés.

3. Procédé selon la revendication 1 ou 2, caractérisé en ce que le support contient en outre au moins un composé (B) d'au moins un élément des groupes IVb et IIIa, le composé (B) étant différent du composé (A).

4. Procédé selon la revendication 3, caractérisé en ce que, pour former le support, on traite le composé (A) à l'état solide avec un gaz comprenant le composé (B).

5. Procédé selon la revendiaction 4, caractérisé en ce qu'on met en oeuvre un lit de particules du composé (A), que l'on fluidise au moyen d'un gaz comprenant le composé (B).

6. Procédé selon la revendication 4 ou 5, caractérisé en ce que le composé (B) est du TiCl₄.

7. Procédé selon l'une quelconque des revendications 4 à 6, caractérisé en ce qu'avant de traiter le composé (A) avec le composé (B), on soumet le composé (A) à une préactivation.

8. Procédé selon l'une quelconque des revendications 1 à 7, caractérisé en ce que le sel de chrome est choisi parmi les sels organiques du chrome.

9. Procédé selon la revendication 8, caractérisé en ce que le sel de chrome est l'acétylacétonate de chrome.

10. Procédé selon l'une quelconque des revendications 1 à 9 caractérisé en ce que le sel de chrome est présent dans le mélange dans des proportions variant de 0,05 à 10 % en poids par rapport au poids total du mélange.

11. Catalyseur de polymérisation des oléfines susceptible d'être obtenu selon le procédé d'une quelconque des revendications 1 à 10.

12. Procédé pour la polymérisation des oléfines en présence d'un catalyseur selon la revendication 11.

13. Procédé selon la revendication 12 appliqué à la polymérisation de l'éthylène.

## Patentansprüche

1. Verfahren zur Herstellung von Katalysatoren zur Olefinpolymerisation, das umfaßt:
a) die Mischung eines Trägers, der wenigstens eine Verbindung (A) enthält, die unter den sauerstoffhaltigen Verbindungen der Elemente der Gruppen IVb, IIIa und IVa ausgewählt ist, mit wenigstens einem Chromsalz bei Abwesenheit von Chromoxid;
b) die Voraktivierung besagten Gemisches durch Erhitzen in oxidierender Atmosphäre bei einer Temperatur, die niedriger als die Schmelztemperatur des Chromsalzes ist, wobei ein Katalysatorvorläufer erhalten wird;
c) die Aktivierung dieses Vorläufers durch Glühen in oxidierender Atmosphäre unter solchen Bedingungen, daß ein Teil des Chroms in sechswertiges Chrom umgewandelt wird.

2. Verfahren gemäß Anspruch 1, dadurch gekennzeichnet, daß der Träger als Verbindungen (A) Siliziumdioxid, Aluminiumoxid, Aluminiumphosphat oder Mischungen dieser Verbindungen enthält.

3. Verfahren gemäß Anspruch 1 oder 2, dadurch gekennzeichnet, daß der Träger außerdem wenigstens eine Verbindung (B) von wenigstens einem Element der Gruppen IVb und IIIa enthält, wobei die Verbindung (B) von der Verbindung (A) verschieden ist.

4. Verfahren gemäß Anspruch 3, dadurch gekennzeichnet, daß man, um den Träger zu bilden, die Verbindung (A) in festem Zustand mit einem Gas, das die Verbindung (B) umfaßt, behandelt

5. Verfahren gemäß Anspruch 4, dadurch gekennzeichnet, daß man ein Bett aus Teilchen der Verbindung (A) verwendet, das man mittels eines Gases, das die Verbindung (B) umfaßt, fluidisiert.

6. Verfahren gemäß Anspruch 4 oder 5, dadurch gekennzeichnet, daß die Verbindung (B) TiCl₄ ist.

7. Verfahren gemäß einem der Ansprüche 4 bis 6, dadurch gekennzeichnet, daß man die Verbindung (A) vor der Behandlung der Verbindung (A) mit der Verbindung (B) einer Voraktivierung unterzieht.

8. Verfahren gemäß einem der Ansprüche 1 bis 7, dadurch gekennzeichnet, daß das Chromsalz unter den organischen Chromsalzen ausgewählt ist.

9. Verfahren gemäß Anspruch 8, dadurch gekennzeichnet, daß das Chromsalz Chromacetylacetonat ist.

10. Verfahren gemäß einem der Ansprüche 1 bis 9, dadurch gekennzeichnet, daß das Chromsalz in dem Gemisch in Anteilen vorhanden ist, die von 0,05 bis 10 Gew.-%, bezogen auf das Gesamtgewicht der Mischung, variieren.

11. Katalysator zur Olefinpolymerisation, der gemäß dem Verfahren nach einem der Ansprüche 1 bis 10 erhalten werden kann.

12. Verfahren zur Polymerisation von Olefinen in Gegenwart eines Katalysators gemäß Anspruch 11.

13. Verfahren gemäß Anspruch 12, das auf die Polymerisation von Ethylen angewendet wird.

## Claims

1. Process for the preparation of catalysts for the polymerisation of olefins, comprising:
a) the mixing of a support containing at least one compound (A) chosen from the oxygen compounds of the elements of groups IVb, IIIa and IVa with at least one chromium salt, in the absence of chromium oxide;
b) the preactivation of the said mixture by heating under an oxidising atmosphere at a temperature which is lower than the melting temperature of the chromium salt to obtain a catalyst precursor;
c) the activation of this precursor by calcining, under an oxidising atmosphere, in conditions such that part of the chromium is converted to hexavalent chromium.

2. Process according to Claim 1, characterised in that the support contains silica, alumina, aluminium phosphate or mixtures of these compounds, as compounds (A).

3. Process according to Claim 1 or 2, characterised in that the support additionally contains at least one compound (B) of at least one element of groups IVb and IIIa, the compound (B) being different from the compound (A).

4. Process according to Claim 3, characterised in that, to form the support, the compound (A) is treated in the solid state with a gas containing the compound (B).

5. Process according to Claim 4, characterised in that a bed of particles of the compound (A) is used, which is fluidised by means of a gas containing the compound (B).

6. Process according to Claim 4 or 5, characterised in that the compound (B) is TiCl₄.

7. Process according to any one of Claims 4 to 6, characterised in that the compound (A) is subjected to a preactivation before the compound (A) is treated with the compound (B).

8. Process according to any one of claims 1 to 7, characterised in that the chromium salt is chosen from organic chromium salts.

9. Proces according to Claim 8, characterised in that the chromium salt is chromium acetylacetonate.

10. Process according to any one of Claims 1 to 9, characterised in that the chromium salt is present in the mixture in proportions varying from 0.05 to 10 % by weight relative to the total weight of the mixture.

11. Catalyst for the polymerisation of olefins, obtainable by the process of any one of Claims 1 to 10.

12. Process for the polymerisation of olefins in the presence of a catalyst according to Claim 11.

13. Process according to Claim 12, applied to the polymerisation of ethylene.
